# EUROPEAN PATENT SPECIFICATION

(11) **EP 3 831 578 B1**
(45) Date of publication and mention of the grant of the patent: **31.12.2025**
(21) Application number: 20210008.7
(22) Date of filing: 26.11.2020
(51) Int. Cl.: B29C 64/165, B33Y 10/00, B33Y 40/20

(54) **METHOD FOR THE PRODUCTION OF PROTOTYPE MODELS**
VERFAHREN ZUR HERSTELLUNG VON PROTOTYPMODELLEN
PROCÉDÉ POUR LA PRODUCTION DE MODÈLES DE PROTOTYPE

(30) Priority: 05.12.2019 IT 201900023034
(43) Date of publication of application: 09.06.2021
(73) Proprietor: Slayer Blades S.r.l., 21040 Oggiona con Santo Stefano (VA) (IT)
(72) Inventor: CINTURA, Luca, 28100 NOVARA (IT); ROSSI, Daniele, 25030 CASTREZZATO BS (IT)
(74) Representative: Modiano, Micaela Nadia

(56) References cited:
- CN-A- 109 571 706
- GB-A- 2 312 184
- US-A1- 2008 105 996
- US-A1- 2018 079 134

## Description

The present invention relates to a method for the physical production of prototype models, according to claim 1, which is useful, particularly but not exclusively, for the automotive sector (that is to say, for the automobile industry).

The method according to the present invention is likewise useful and practical for prototyping in the aerospace, architecture, artistic and mechanical sectors.

A "prototype model" (or simply "model", or "prototype") is a physical three-dimensional model that reproduces in detail the form and the appearance of a given product at the design stage (for example a vehicle or a mechanical part) in order to be able, before proceeding to manufacture the product itself, to evaluate its characteristics such as geometry, outward appearance, aerodynamics etc.

Prototype models can be life-size or, more commonly, at a reduced scale.

Nowadays prototype models are made of various materials, such as wood, clay, and plastic material.

One of the known methods in use nowadays for providing prototype models is manual prototyping (also known as "clay modeling"), in which one or more modelers "craft" the model using manual techniques of working materials (sculpting wood and/or plastic materials, modeling clay etc.) and if necessary assembling several parts.

As is evident, this technique requires a great deal of time and is highly conditioned by the manual abilities of the modeler who carries it out.

Furthermore, the precision of the details, in prototype models thus obtained, is often not sufficient or in any case not entirely optimal.

Another known method of making prototype models is constituted by prototyping by milling, in which the prototype model is shaped by removing material by milling from one or more blocks of plastic material or of resin or of wood. This method is usually carried out automatically by a numerically controlled milling machine that executes the milling work starting from a virtual 3D model.

In more detail, in its most widespread embodiments, prototyping by milling normally entails the use of several slabs made of resin which need to first be glued together using epoxy resins, taking account of the maximum millable heights (defined by the dimensions of the tools used). The slabs then need to be fixed to a worktable.

Subsequently, it is necessary to set up the machine, by creating a machine zero point, resetting all the tools and programming the tool paths.

These methods of providing prototypes by milling, in addition to the complications due to the steps just described, have the disadvantage of requiring a rather long period of time in order to complete a single model: by way of example, an automotive model approximately one meter in size requires 2-3 days of work.

Furthermore, an aspect with room for improvement of prototyping by milling is the precision of details, in that the level of detail obtainable is often not sufficiently high or in any case not optimal.

Further known methods of providing prototype models entail the use of one of the following methods of 3D printing:
- selective laser sintering, also known as "SLS" (Selective Laser Sintering), consisting in particular in the deposition by sintering thermoplastic materials, or metallic powders, or ceramic powders;
- stereolithography (also known as "ALS"), consisting in particular of polymerization using light, or deposition of photopolymers;
- extrusion of materials, in particular filament extrusion, a method also known as Fused Deposition Modeling or "FDM".

These known methods of providing prototype models using the above mentioned methods of 3D printing, although faster and more precise than the others described previously, have the disadvantage of having a very high cost, a cost that depends mostly on the print material which, in all the methods listed, has a high technical value.

Document US 2018/079134 A1 discloses a method for the production of prototype models according to the preamble of claim 1.

The aim of the present invention consists of providing a method for the production of prototype models that solves the above-mentioned drawbacks and overcomes the limitations of the known art.

Within this aim, an object of the present invention is to provide a method for the production of prototype models that is faster in execution with respect to the known art.

Another object of the invention consists of providing a method for the production of prototype models that makes it possible to achieve a high level of detail.

Another object of the invention consists of providing a method for the production of prototype models that is easily implemented.

Another object of the invention consists of providing a method for the production of prototype models that is of low cost when compared to the known art.

This aim and these and other objects which will become better apparent hereinafter are achieved by a method for the production of prototype models, in particular prototypes for the automotive sector, characterized in that it comprises the steps of:
- creating a prototype model using sand 3D printing;
- impregnating said sand-printed prototype model with resin; wherein said resin has an average viscosity comprised between 235 mPas and 245 mPas, a density comprised between 1 g/ml and 1.20 g/ml and a pot life comprised between 14 and 18 minutes.

This aim and these and other objects which will become better apparent hereinafter are also achieved by a use according to claim 9.

Further characteristics and advantages of the invention will become better apparent from the description of some preferred, but not exclusive, embodiments of a method for the production of prototype models, which are illustrated by way of non-limiting example with the aid of the accompanying drawings wherein:

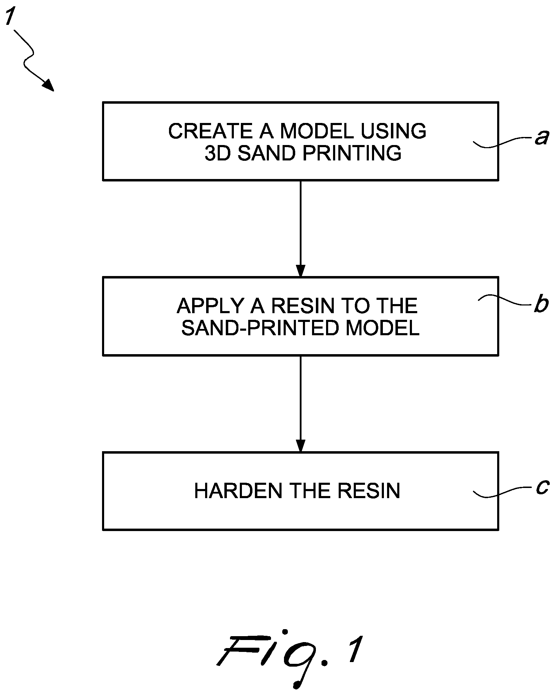

Figure 1 is a flowchart representing a possible embodiment of the method, according to the invention;
Figure 2 is a Cartesian graph representing the thickness of impregnation of the resin as a function of the length of time of application, in a method according to the invention.

With reference to the figures, the method for the production of prototype models, designated with the reference numeral 1, is necessary in particular for the production of prototype models for the automotive sector (i.e. for the automobile industry) such as for example scale models of motor vehicles or of parts of motor vehicles, but also for the models that are usually used in the aerospace sector (for example models of aircraft or parts of aircraft), the mechanical sector (models of machines or of parts of machines, or of tools etc.), the architecture sector (models of buildings or of other architectural structures or parts thereof), and the artistic sector (models of sculptures, monuments, artworks etc.).

The term "prototype model" (or simply model, or prototype) indicates a three-dimensional crafted article (or a model or physical prototype) that reproduces in detail the form and appearance of a predetermined object; therefore the expression "production of prototype models" indicates the physical (and not virtual) construction of such prototype models, which may derive from an adapted virtual 3D model.

According to the invention, the method comprises a first step a. of creating a prototype model using sand 3D printing (for example starting from a virtual 3D model) and a second step b. of impregnating such sand-printed model with a resin.

Following application of the resin, conveniently there is a step c. of hardening of the resin in which the resin hardens, giving the model an optimal level of strength.

This last step can be carried out by simply waiting for the resin to harden.

The term "sand printing" indicates an additive process, of the type also known with the term "binder jetting", which uses sand as an additive material, in which successive layers of sand are deposited together with a binder material (for example a polymeric binder and/or a resin).

In more detail, in the preferred embodiments, in the 3D printing method using sand, a binder is deposited selectively on a bed of sand, binding these areas together in order to form a solid part, one layer at a time for a suitable number of layers.

For example, for the practical aspects not explicitly described here, 3D printing using sand can be carried out in a manner similar to conventional 3D sand molding, which is commonly used to provide single-use molds for use in foundries, such as cores and blocks.

The subsequent step of application of a resin on the sand-printed model makes it possible to increase the strength of the printed material (which in the above mentioned conventionally sand-molded components is limited to a value of 500 Nm/cm²) thus making it adapted to function as a prototype model.

In order to achieve such object the Applicant, through research and experimentation, has identified a combination of physical/chemical characteristics of the resin, as well as modes and thicknesses of absorption of that resin, which make it possible to increase the strength of the prototype model printed in sand up to rendering it suitable for the use intended in the present invention.

In particular the identified characteristics of the resin are the following:
- average viscosity preferably comprised between 235 mPas and 245 mPas and even more preferably equal to 240 mPas;
- density preferably comprised between 1 g/ml and 1.20 g/ml and even more preferably equal to 1.10 g/ml;
- pot life (a term used in the sector to indicate the useful lifetime for applying the resin) preferably comprised between 14 and 18 minutes and even more preferably equal to 16 minutes.

For clarity, it should be noted that "pot life" is generally defined as the useful time for using a mixture a concentrated mass of 200 g. at 20°C, before it begins to harden.

In the preferred embodiments, the resin comprises, and preferably is constituted by, an epoxy and/or polyurethane resin. Preferably the resin is a two-component resin.

In some embodiments, the resin is applied by brushing or spraying onto the surface of the sand-printed model.

In other embodiments, the resin is applied by immersing such model in the resin. In these latter embodiments, the model is immersed in the resin for a length of time comprised between 10 and 20 seconds, and preferably for 15 seconds (this length of time makes it possible to obtain an impregnation of the resin into the surface of the sand-printed model of approximately 4 mm and more precisely of 4.3 mm).

The possibility is not ruled out of combining the two techniques of application of the resin.

With reference in more detail to the embodiments in which resin is applied by spreading it on the surface of the sand-printed model, the Applicant has identified and tested in detail the following embodiments of the step of application of the resin, in which the resin is applied with successive brushed coats, each one lasting 6 seconds:
Embodiment I: application by one brushed coat (application time = 6 seconds) with which a thickness of the resin film impregnated in the model equal to 1.67 mm is obtained;
Embodiment II: application by two brushed coats (application time = 12 seconds) with which a thickness of the resin film impregnated in the model equal to 2.3 mm is obtained;
Embodiment III: application by three brushed coats (application time = 18 seconds) with which a thickness of the resin film impregnated in the model equal to 3.4 mm is obtained;
Embodiment IV: application by four brushed coats (application time = 24 seconds) with which a thickness of the resin film impregnated in the model equal to 3.8 mm is obtained;
Embodiment V: application by five brushed coats (application time = 30 seconds) with which a thickness of the resin film impregnated in the model equal to 4.2 mm is obtained;
Embodiment VI: application by six brushed coats (application time = 36 seconds) with which a thickness of the resin film impregnated in the model equal to 4.21 mm is obtained;
Embodiment VII: application by seven brushed coats (application time = 42 seconds) with which a thickness of the resin film impregnated in the model equal to 4.25 mm is obtained;
Embodiment VIII: application by eight brushed coats (application time = 48 seconds) with which a thickness of the resin film impregnated in the model equal to 4.3 mm is obtained;
Embodiment IX: application by nine brushed coats (application time = 56 seconds) with which a thickness of the resin film impregnated in the model equal to 4.32 mm is obtained.

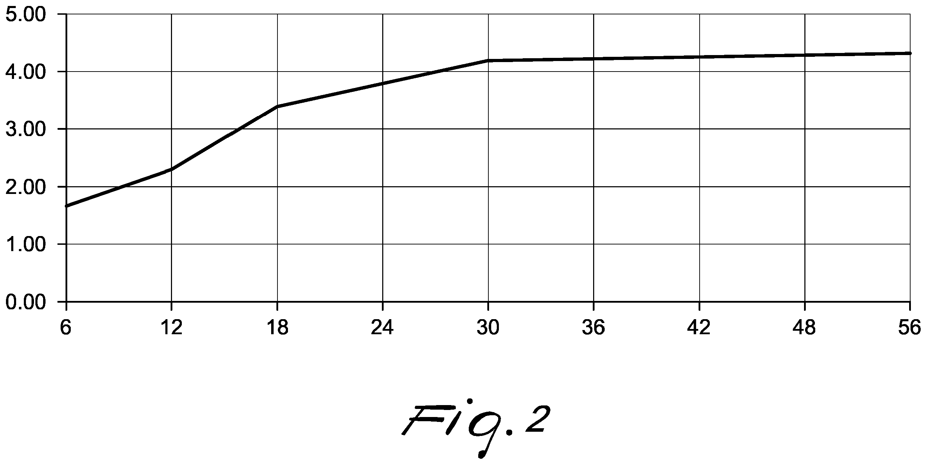

Figure 2 is a Cartesian chart showing the data just described, in which the ordinate indicates the thickness (expressed in mm) and the abscissa indicates the length of time of application (expressed in seconds). Note that the length of time of application of the resin here is comprised between 6 seconds and 56 seconds.

More generally, in the preferred embodiments, in the step of application of the resin, the resin is applied so as to obtain an impregnation within the surface of the sand-printed model to a depth comprised between 1.6 mm and 4.3 mm and preferably equal at least to 4 mm.

Optionally, after executing the 3D printing using sand and before application of the resin, there is a step of cleaning the printed model, in which sand and/or other residual materials are removed from the surface of the model.

Note that, in the method according to the invention, the use of 3D printing makes it possible to obtain a high level of detail, superior to that obtainable with prototyping using milling, and at the same time to reduce timescales: in practice it is found that an automotive model approximately one meter in size (for which with prototyping by milling 2-3 days of work are necessary) can be made with the method according to the invention in less than 24 hours (specifically: 6.5 hours to execute the first step of printing, 1 hour for cleaning, 1 hour to execute the step of application of the resin, and 5/6 hours for the resin to harden).

Furthermore, by virtue of the use of sand as an additive material, the method according to the invention makes it possible to drastically reduce costs with respect to the known methods of providing prototype models using 3D printing methods, as sand is far more economic than the materials used by those methods.

In practice it has been found that the method for the production of prototype models, according to the present invention, achieves the intended aim and objects in that it is faster in execution with respect to the known art.

Another advantage of the method, according to the invention, consists in that it makes it possible to achieve a high level of detail.

Another advantage of the method, according to the invention, consists in that it is simple to carry out.

Another advantage of the method, according to the invention, consists in that it is of low cost when compared to the known art.

The method for the production of prototype models thus conceived is susceptible of numerous modifications and variations, all of which are within the scope of the appended claims.

Moreover, all the details may be substituted by other, technically equivalent elements.

The disclosures in Italian Patent Application No. 102019000023034 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method (1) for the production of prototype models, in particular prototypes for the automotive sector, comprising the steps of:
a. creating a prototype model using sand 3D printing;
b. impregnating said sand-printed prototype model with a resin; **characterized in that** said resin has an average viscosity comprised between 235 mPas and 245 mPas, a density comprised between 1 g/ml and 1.20 g/ml and a pot life comprised between 14 and 18 minutes.

2. The method (1) according to claim 1, **characterized in that** said resin comprises an epoxy and/or polyurethane resin.

3. The method (1) according to one or more of the preceding claims, **characterized in that** said resin has an average viscosity equal to 240 mPas, a density equal to 1.10 g/ml, and a pot life equal to 16 minutes.

4. The method (1) according to one or more of the preceding claims, **characterized in that** in step b. said resin is applied by brushing or spraying onto the surface of said sand-printed model.

5. The method (1) according to one or more of the preceding claims, **characterized in that** in step b. said resin is impregnated by immersing said model in said resin.

6. The method (1) according to claim 6, **characterized in that** said model is immersed in said resin for a time comprised between 10 and 20 seconds.

7. The method (1) according to one or more of the preceding claims, **characterized in that** in step b. said resin is applied so as to obtain an impregnation within the surface of said sand-printed model to a depth comprised between 1.6 mm and 4.3 mm.

8. The method (1) according to one or more of the preceding claims, **characterized in that** in step b. said resin is applied by spreading it for a time comprised between 6 seconds and 56 seconds.

9. The use of a sand 3D printing method according to one or more of the preceding claims, for the production of prototype models, particularly prototypes for the automotive sector.

## Patentansprüche

1. Ein Verfahren (1) zur Herstellung von Prototypmodellen, insbesondere Prototypen für den Kraftfahrzeugsektor, das folgende Schritte umfasst:
a. das Erstellen eines Prototypmodells mit Hilfe von 3D-Sanddruck;
b. das Imprägnieren des sandgedruckten Prototypmodells mit einem Harz; **dadurch gekennzeichnet, dass** das Harz eine durchschnittliche Viskosität zwischen 235 mPas und 245 mPas, eine Dichte zwischen 1 g/ml und 1,20 g/ml und eine Topfzeit zwischen 14 und 18 Minuten hat.

2. Das Verfahren (1) gemäß Anspruch 1, **dadurch gekennzeichnet, dass** das Harz ein Epoxid- und/oder Polyurethanharz umfasst.

3. Das Verfahren (1) gemäß einem oder mehreren der obigen Ansprüche, **dadurch gekennzeichnet, dass** das Harz eine durchschnittliche Viskosität gleich 240 mPas, eine Dichte gleich 1,10 g/ml und eine Topfzeit gleich 16 Minuten hat.

4. Das Verfahren (1) gemäß einem oder mehreren der obigen Ansprüche, **dadurch gekennzeichnet, dass** in Schritt b. das Harz durch Aufpinseln oder Aufsprühen auf die Oberfläche des sandgedruckten Modells aufgetragen wird.

5. Das Verfahren (1) gemäß einem oder mehreren der obigen Ansprüche, **dadurch gekennzeichnet, dass** in Schritt b. das Harz durch Eintauchen des Modells in das Harz imprägniert wird.

6. Das Verfahren (1) gemäß Anspruch 6, **dadurch gekennzeichnet, dass** das Modell in das Harz für einen Zeitraum zwischen 10 und 20 Sekunden eingetaucht wird.

7. Das Verfahren (1) gemäß einem oder mehreren der obigen Ansprüche, **dadurch gekennzeichnet, dass** in Schritt b. das Harz zum Erhalten einer Imprägnierung in die Oberfläche des sandgedruckten Modells in einer Tiefe zwischen 1,6 mm und 4,3 mm eingebracht wird.

8. Das Verfahren (1) gemäß einem oder mehreren der obigen Ansprüche, **dadurch gekennzeichnet, dass** in Schritt b. das Harz durch Verteilen desselben für einen Zeitraum zwischen 6 Sekunden und 56 Sekunden aufgetragen wird.

9. Die Verwendung eines 3D-Sanddruckverfahrens gemäß einem oder mehreren der obigen Ansprüche zur Herstellung von Prototypmodellen, insbesondere Prototypen für den Kraftfahrzeugsektor.

## Revendications

1. Procédé (1) pour la production de modèles de prototype, en particulier de prototypes pour le secteur automobile, comprenant les étapes suivantes :
a. création d'un modèle prototype à l'aide d'une impression 3D sur sable ;
b. imprégnation dudit modèle prototype imprimé sur sable avec une résine ; **caractérisé en ce que** ladite résine a une viscosité moyenne comprise entre 235 mPas et 245 mPas, une densité comprise entre 1 g/ml et 1,20 g/ml et une durée de vie en pot comprise entre 14 et 18 minutes.

2. Procédé (1) selon la revendication 1, **caractérisé en ce que** ladite résine comprend une résine époxy et/ou polyuréthane.

3. Procédé (1) selon une ou plusieurs des revendications précédentes, **caractérisé en ce que** ladite résine a une viscosité moyenne égale à 240 mPas, une densité égale à 1,10 g/ml et une durée de vie en pot égale à 16 minutes.

4. Procédé (1) selon une ou plusieurs des revendications précédentes, **caractérisé en ce que**, à l'étape b., ladite résine est appliquée par brossage ou pulvérisation sur la surface dudit modèle imprimé sur sable.

5. Procédé (1) selon une ou plusieurs des revendications précédentes, **caractérisé en ce que**, à l'étape b., ladite résine est imprégnée par immersion dudit modèle dans ladite résine.

6. Procédé (1) selon la revendication 6, **caractérisé en ce que** ledit modèle est immergé dans ladite résine pendant une durée comprise entre 10 et 20 secondes.

7. Procédé (1) selon une ou plusieurs des revendications précédentes, **caractérisé en ce que**, à l'étape b., ladite résine est appliquée de manière à obtenir une imprégnation à l'intérieur de la surface dudit modèle imprimé sur sable à une profondeur comprise entre 1,6 mm et 4,3 mm.

8. Procédé (1) selon une ou plusieurs des revendications précédentes, **caractérisé en ce que**, à l'étape b, ladite résine est appliquée par étalement pendant une durée comprise entre 6 secondes et 56 secondes.

9. Utilisation d'un procédé d'impression 3D sur sable selon une ou plusieurs des revendications précédentes, pour la production de modèles de prototype, en particulier de prototypes pour le secteur automobile.
